# EUROPÄISCHE PATENTSCHRIFT

(11) **EP 0 241 954 B1**
(45) Veröffentlichungstag und Bekanntmachung des Hinweises auf die Patenterteilung: **27.10.1993**
(21) Anmeldenummer: 87200316.5
(22) Anmeldetag: 25.02.1987
(51) Int. Cl.: H04Q 7/04, H04B 7/26

(54) **Digitales Funkübertragungssystem und Mobilfunkteilnehmergerät für ein solches digitales Funkübertragungssystem.**
Digital radio transmission system and mobile radio subscriber device for such a digital radio transmission system.
Système numérique de radio-transmission et appareil radiomobile d'abonné pour ce système numérique de radio-transmission.

(30) Priorität: 08.03.1986 DE 3607687
(43) Veröffentlichungstag der Anmeldung: 21.10.1987
(73) Patentinhaber: Philips Patentverwaltung GmbH, 22335 Hamburg (DE); Philips Electronics N.V., 5621 BA Eindhoven (NL)
(72) Erfinder: Schmidt, Werner, Dr.-Ing., Co. Roscommon (IE)
(74) Vertreter: Peuckert, Hermann, Dipl.-Ing.

(56) Entgegenhaltungen:
- EP-A- 0 064 686
- EP-A- 0 126 557
- EP-A- 0 156 335
- EP-A- 0 209 185
- WO-A-87/01897
- DE-A- 2 537 683
- DE-A- 3 200 965

## Beschreibung

Die Erfindung betrifft ein digitales Funkübertragungssystem mit ortsfesten und beweglichen Funktstationen mit frequenzmä-ßiger Trennung benachbarter Funkzellen und mit einer Trennung von Gleichkanal-Funkzellen durch unterschiedliche Signalformen, insbesondere durch untersschiedliche Spreizcodes. Die Erfindung betrifft ferner ein Mobilfunkteilnehmergerät für ein solches digitales Funkübertragungssystem.

Aus DE 25 37 683 Al ist ein Funkübertragungssystem mit ortsfesten Funkstationen und beweglichen Teilnehmerstationen bekannt, bei dem alle ortsfesten Funkstellen mittels eines Codemultiplex-Zugriffsverfahrens auf dem gleichen Dienstkanal arbeiten. Zur Auswahl der augenblicklich günstigsten Funkverbindung wird vor Verbindungsaufbau von der beweglichen Teilnehmerstation eine Pegelmessung der empfangenen Signale aller umliegenden festen Funkstellen durchgeführt.

Aus diesem Dokument ist es weder bekannt, während des Bestehens einer Funkverbindung weitere Pegelmessungen durchzuführen noch ist es bekannt, die bewegliche Teilnehmerstation an eine andere ortsfeste Funkstation weiterzureichen.

Aus der DE 32 00 965 Al ist ein Nachbarfunkzellen-Organisationskanal-Verweisungssystem bekannt, bei dem eine Neuzuordnungen von mobilen Funkstellen bei Nachbarfunkzellen durch die mobile Funkstelle selbst erfolgt. Hierzu werden freie Übertragungskapazitäten eines oder mehrerer Organisationskanäle innerhalb einer Funkzelle dazu benutzt, um Organisationsangaben über in den Nachbarfunkzellen benutzen Organisationskanal-Frenquenzen abzugeben. Eine betreffende Mobilfunkstation führt in geeigneten zeitlichen Abständen Pegelvergleichsmessungen auf den angegebenen Organisationskanal-Frequenzen zum Zwecke ihrer gegebenenfalls notwendigen Neuzuordnung zu einer Nachbarfunkzelle durch. Wenn eine bessere Funkverbindungsqualität auf einen der betreffenden Nachbarfunkzellen-Organisationskanäle besteht, erfolgt die Neuzuordnung der Mobilfunkstation zu der entsprechenden Nachbarfunkzelle.

Der Erfindung liegt die Aufgabe zugrunde, ein digitales Funkübertragungssystem für das Weiterschalten einer Funkverbindung bei Funkzellenwechsel durch die bewegliche Funkstation derart anzugeben, daß das Weiterschalten automatisch und ohne Gesprächsunterbrechung erfolgt und daß zur Gewinnung eines Weiterschaltkriteriums kein Feldstärke-Meßempfänger in der ortsfesten Funkstation erforderlich ist.

Diese Aufgabe wird durch ein System mit den Merkmalen des Patentanspruchs 1 gelöst.

Durch die Messung von Empfangsgütekriterien in der beweglichen Funkstation kann in Gebieten mit unterschiedlicher Bebauung das bei alleiniger Verwendung des Kriteriums Empfangsfeldstärke auftretende wiederholte Weiter- und Zurückschaltung des Gesprächs bei einem einzigen Funkzellenwechsel weitgehend vermieden werden. Weiterhin können in vorteilhafter Weise in der beweglichen Funkstation bereits vorhandene Einrichtungen, insbesondere zur Durchführung der Messung der Empfangsgütekriterien mit ausgenutzt werden. Eine Beteiligung der Funkvermittlungseinrichtung an der Weiterreich Entscheidung ist beim erfindungsgemäßen Verfahren nicht erforderlich, wodurch die dynamische Belastung der Funkvermittlungsstelle verringert wird. Dadurch, daß die bewegliche Funkstation während des Bestehens einer Funkverbindung mit einer ortsfesten Funkstation die Empfangsgüte der Gleichkanal-Nachrichtenübertragungskanäle von entfernten ortsfesten Funkstationen mißt, ist in der beweglichen Funkstation keine Synthesizer-Umschaltung erforderlich. Die Gleichkanal-Nachrichtenübertragungskanäle der entfernten ortsfesten Funkstationen unterscheiden sich nur durch unterschiedliche Codewörter im Vergleich zur nahen ortsfesten Funkstation. Der in der beweglichen Funkstation angeordnete Empfänger kann somit zur Überwachung der bestehenden Funkverbindung während des Gesprächs zusätzlich ausgenützt werden. Im digitalen Funkübertragungssystem senden die ortsfesten Funkstationen in regelmäßigen Zeitabständen zwischen den Datensymbolen eingeblendete Synchronisiersymbole im Zeitmultiplexrahmen, wie dies beispielsweise in der nichtvorveröffentlichten deutschen Patentanmeldung mit dem amtlichen Aktenzeichen P 35 11 430.4 vorgeschlagen ist. Die Synchronisiersymbole werden von der ortsfesten Funkstation in allen Nachrichtenübertragungskanälen zeitlich parallel und synchronisiert gesendet. Die in allen Nachrichtenübertragungskanälen gleichzeitig gesendeten, gleichen Synchronisiersymbole werden in der beweglichen Funkstation im Vergleich zur Nutzinformation mit wesentlich höherer Energie empfangen. Wird als Umschaltkriterium die Sendefeldstärke der entfernten ortsfesten Funkstationen zugrundegelegt, so ist die Auswertung einfach durchzuführen.

Werden gemäß Patentanspruch 2 die Spreizcodewörter der entfernten ortsfesten Funkstationen von der verbindungshaltenden, nahen ortsfesten Funkstation der beweglichen Funkstation mitgeteilt, so können die in der beweglichen Funkstation ermittelten Meßwerte der Empfangsgüte auch diesen entfernten ortsfesten Funkstationen mitgeteilt werden und die Entscheidung auf Umschaltung von dort ausgehend eingeleitet werden.

Gemäß dem System nach Patentanspruch 3 ist in der ortsfesten Funkstation ein Speicher vorgesehen, in welchem die von der beweglichen Funkstation gesendeten Meßwerte gespeichert werden. Diese Meßwerte beziehen sich dabei nicht auf Nachrichtenübertragungskanäle von der ortsfesten Funkstation benachbarten ortsfesten Funkstationen, wie beim Verfahren gemäß der DE-AS 26 34 080, sondern auf Gleichkanal-Nachrichtenübertragungskanäle von entfernten ortsfesten Funkstationen. Durch Gewichtung der gespeicherten Meßwerte kann im digitalen Funkübertragungssystem auch während des Betriebs eine Anpassung an das Gelände erfolgen. Bei einem aus der DE-OS 29 37 018 bekannten Verfahren zur Kanalzuteilung wird vor Inbetriebnahme des Netzes durch Messungen festgestellt, wo Gleichkanalstörungen auftreten können. Die Ausbreitungsbedingungen in einem Funkübertragungssystem ändern sich während des Betriebs ständig (beispielsweise durch das Wetter), so daß durch die Verknüpfung der Meßwerte mit den Gewichtungsfaktoren eine Anpassung an die Kanaleigenschaften erfolgen kann und die Übertragungssicherheit erhöht werden kann. Wie bereits ausgeführt, werden in allen Nachrichtenübertragungskanälen die Synchronisiersymbole gleichzeitig und damit mit höherer mittlerer Leistung gesendet. Dadurch werden die Synchronisiersymbole in der beweglichen Funkstation nahezu störungsfrei empfangen und können gemäß Patentanspruch 5 zur Messung der Empfangsgüte herangezogen werden.

Wie bereits ausgeführt, erfolgt die Einblendung der Synchronisiersymbole in den kontinuierlichen Datenstrom der Nutzinformation in bestimmten zeitlichen Abständen, welche so festgelegt sind, daß auch bei hohen Fahrzeuggeschwindigkeiten eine Ausnützung des Mehrwegeempfangs möglich ist. Durch eine phasenstarre (nicht notwendigerweise phasengleiche) Addition der Synchronisiersymbole wird ein (unkontrolliertes) gegenseitiges Auslöschen der ansich identischen Synchronisiersymbole in den einzelnen Nachrichtenübertragungskanäle vermieden. Wird gemäß Patentanspruch 5 als Empfangsgütekriterium das Mehrwegeprofil herangezogen, so können in den Empfangseinrichtungen anhand des vermessenen Mehrwege-Profils die Nachrichtenübertragungskanäle an die Kanaleigenschaften angepaßt und die Übertragungssicherheit weiter erhöht werden. In der beweglichen Funkstation ist als zusätzliche Einrichtung lediglich ein zusätzlicher Speicher für die Aufnahme der Meßwerte notwendig und in vorteilhafter Weise können bereits vorhandene Einrichtungen in der beweglichen Funkstation mit verwendet werden.

Das erfindungsgemäße Verfahren wird im folgenden anhand in der Zeichnung dargestellter Ausführungsformen näher beschrieben und erläutert. Es zeigt:
- Fig. 1: die Zellstruktur des digitalen Funkübertragungsssystems,
- Fig. 2: das Blockschaltbild einer ersten Ausführungsform und
- Fig. 3: das Blockschaltbild einer zweiten Ausführungsform der beim erfindungsgemäßen Verfahren in der beweglichen Funkstation verwendeten Schaltungsanordnung.

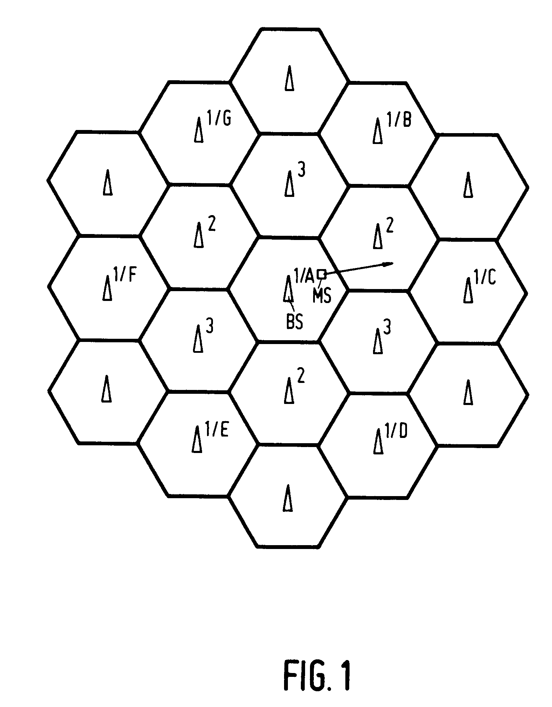

Fig. 1 zeigt eine Ausführungsform für eine Zellstruktur des digitalen Funkübertragungssystems. Im Mittelpunkt der verschiedenen Funkzellen sind ortsfeste Funkstationen BS angeordnet. Die Bewegungsrichtung einer beweglichen Funkstation MS ist in Fig. 1 durch den Pfeil der Fahrtrichtung dargestellt.

Im digitalen Funkübertragungssystem werden Kanalsätze beispielsweise durch die Aufeinanderfolge von Codemultiplex- und Frequenzmultiplexverfahren auf die zu übertragenden Nachrichtensignale gebildet. Die Trennung der Nachrichtenübertragungskanäle von benachbarten ortsfesten Funkstationen BS erfolgt unter Anwendung des Frequenzmultiplexverfahrens, d.h. verschiedene HF-Träger für die in diesen ortsfesten Funkstationen verwendeten Kanalsätze, was in Fig. 1 durch die erste Ziffer verdeutlicht wird. Die Funkzellen können zu Zellgruppen (Cluster) zusammengefaßt werden, wobei in den verschiedenen Funkzellen einer Zellgruppe unterschiedliche Kanalsätze verwendet werden und sich die Verteilung der Kanalsätze in einer Zellgruppe räumlich periodisch wiederholt. Beim Netzentwurf ist der Gleichkanalwiederholabstand und damit auch die Größe der Zellgruppe so zu wählen, daß für die Interferenzfreiheit im Netz bestimmte Anforderungen erfüllt werden. Gleichkanalfunkzellen werden im digitalen Funkübertragungssystem durch unterschiedliche Codewörter voneinander getrennt, was in Fig. 1 durch die Buchstaben A bis G verdeutlicht wird.

Für die Funkzellenzuordnung und damit für die Weiterreich-Entscheidung werden in der beweglichen Funkstation MS Messungen von Empfangsgütekriterien durchgeführt. Hierzu wird zusätzlich während des Bestehens einer Funkverbindung mit der nahen ortsfesten Funkstation BS 1/A (im Mittelpunkt der in Fig. 1 dargestellten Netzstruktur) in der beweglichen Funkstation MS die Empfangsgüte der Gleichkanal-Nachrichtenübertragungskanäle von entfernten ortsfesten Funkstationen BS gemessen. Bei dem in Fig. 1 dargestellten Ausführungsbeispiel für die Netzstruktur mißt die bewegliche Funkstation MS die Sendefeldstärke der ortsfesten Funkstationen BS mit 1/B, 1/C, 1/D, 1/E, 1/F und 1/G. Die Entscheidung auf Weiterschaltung der Funkverbindung wird in der verbindungshaltenden, nahen ortsfesten Funkstation BS getroffen. Hierzu werden die Meßergebnisse zur verbindungshaltenden, nahen ortsfesten Funkstation BS in einem niederratigen Signalisierungskanal (ACCH) übertragen. Dies erfolgt für die Teilnehmer unhörbar parallel zur Übertragung der digitalisierten Sprache. Eine andere Möglichkeit besteht darin, die Meßergebnisse während der Sprachpausen anstelle der digitalisierten Sprache zu übertragen und diese Meßergebnisse in der ortsfesten Funkstation vor der Rückwandlung der Sprache auszublenden.

In der ortsfesten Funkstation BS ist ein Speicher für die von der beweglichen Funkstation MS über den Nachrichtenübertragungskanal übertragenen Meßwerte vorgesehen. In diesem Speicher werden vorgegebene Schwellwerte für die Empfangsgüte der Gleichkanal-Nachrichtenübertragungskanäle von entfernten ortsfesten Funkstationen BS aufgenommen und durch Vergleich dieser Werte mit den von der beweglichen Funkstation MS für diese ortsfesten Funkstationen ermittelten Meßwerten kann die Entscheidung in der ortsfesten Funkstation BS 1/A über das Weiterschalten der Funkverbindung getroffen werden. Der Vergleichsoperation liegt also eine Funkpeilung zugrunde, wobei sich die vorgenommene Funkpeilung in der Zunahme und Abnahme der jeweiligen Meßergebnisse wiederspiegelt. Ohne Abänderung des erfindungsgemäßen Verfahrens können für jede ortsfeste Funkstation BS über einen Meßzeitraum hinweg mehrere Messungen durchgeführt werden und durch Mittelwertbildung die Entscheidungssicherheit erhöht werden. Zur Anpassung an die, die Ausbreitungsbedingungen beeinflussenden Faktoren, z.B. Gelände, Wetter usw. können die Meßwerte vor der Speicherung mit Gewichtungsfaktoren verknüpft werden.

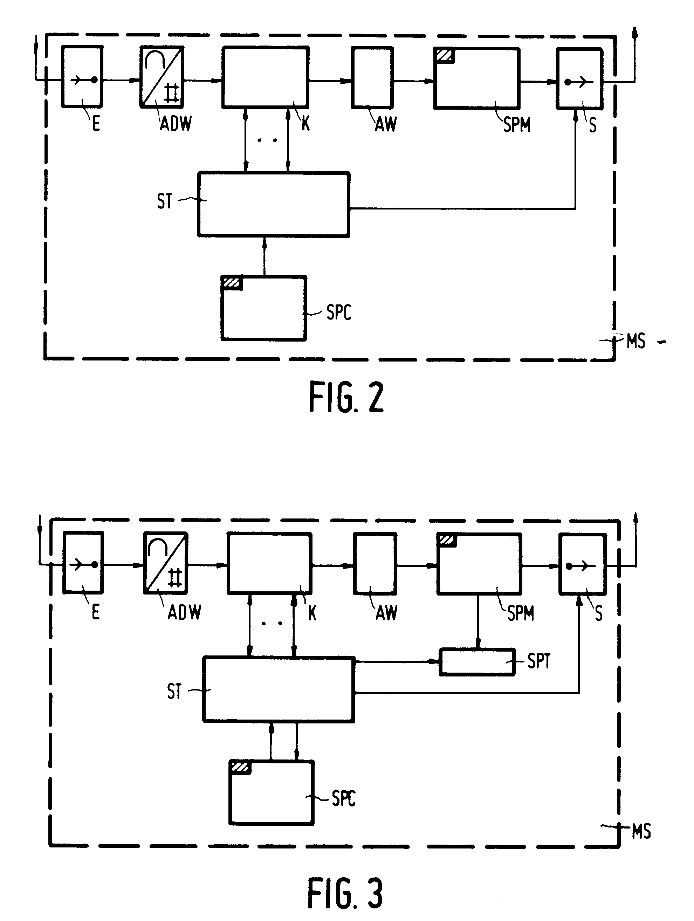

Fig. 2 zeigt das Blockschaltbild einer ersten Ausführungsform der bei der Durchführung des erfindungsgemäßen Systems in der beweglichen Funkstation MS vorgesehenen Schaltungsanordnung. Die von der Antenne empfangenen Signale werden einem Empfänger E zugeführt, dessen Ausgang mit einem Analog-Digital-Wandler ADW verbunden ist. Der Empfänger E umfaßt dabei sowohl eine HF-Eingangsstufe, einen Oszillator und ein ZF-Teil mit einem geregelten Verstärker. Die dadurch in das Basisband umgesetzten Signale werden zur weiteren Verarbeitung über den Analog-Digital-Wandler ADW einem mit diesem verbundenen Korrelator K zugeführt. Der Korrelator K ist sowohl mit einer Steuereinrichtung ST als auch mit einer Auswerteschaltung AW verbunden. Mittels der Auswerteschaltung AW wird eine Auswertung der gemessenen Empfangsgüte der Gleichkanal-Nachrichtenübertragungskanäle von entfernten ortsfesten Funkstationen BS vorgenommen. Die ausgewerteten Meßwerte werden in einem mit der Auswerteschaltung AW verbundenen ersten Speicher SPM abgespeichert und diese Meßwerte werden mittels einem Sender S über den Nachrichtenübertragungskanal zur ortsfesten Funkstation BS übertragen. Die Steuereinrichtung ST ist sowohl mit dem Sender S als auch mit einem dritten Speicher SPC verbunden, in welchem die Codewörter abgespeichert sind. Als Speicher wird hierfür (beispielsweise) ein Festwertspeicher (ROM-Speicher) verwendet.

Soll der Speicheraufwand in der beweglichen Funkstation MS reduziert werden, so kann auch der erste Speicher SPM ohne Änderung des erfindungsgemäßen Verfahrens entfallen, wobei in der beweglichen Funkstation MS dann auf Aufforderung durch die ortsfeste Funkstation BS die erste Messung der Empfangsgütekriterien erfolgt, dieser Meßwert über den Nachrichtenübertragungskanal zur ortsfesten Funkstation BS übertragen wird, danach die zweite Messung erfolgt usw..

In Fig. 3 ist das Blockschaltbild einer zweiten Ausführungsform für eine bei der Durchführung des erfindungsgemäßen Systems verwendeten Schaltungsanordnung dargestellt. In der beweglichen Funkstation MS ist ein mit dem ersten Speicher SPM und mit der Steuereinrichtung ST verbundener zweiter Speicher SPT angeordnet. Im zweiten Speicher SPT werden die in vorangegangenen Meßzyklen von der Auswerteschaltung AW der beweglichen Funkstation MS ausgewerteten Meßwerte gespeichert. In diesem Speicher SPT können auch von der ortsfesten Funkstation BS über den Nachrichtenübertragungskanal zur beweglichen Funkstation MS gesendeten Schwellwerte für die Empfangsgüte der entfernten ortsfesten Funkstationen BS gespeichert werden. Die Steuereinrichtung ST trifft anhand der im zweiten Speicher SPT gespeicherten ausgewerteten Meßwerte die Entscheidung auf Weiterschaltung der Funkverbindung.

## Patentansprüche

1. Digitales Funkübertragungssystem mit ortsfesten und beweglichen Funkstationen mit frequenzmäßiger Trennung benachbarter Funkzellen und mit einer Trennung von Gleichkanal-Funkzellen durch unterschiedliche Signalformen, insbesondere durch unterschiedliche Spreizcodes,
dadurch gekennzeichnet,
daß zum Weiterschalten einer Funkverbindung bei Funkzellenwechsel einer beweglichen Funkstation die bewegliche Funkstation (MS) während des Bestehens einer Funkverbindung mit einer nahen ortsfesten Funkstation (BS) zum Messen der Empfangsgüte der Gleichkanal-Nachrichtenübertragungskanäle von entfernten ortsfesten Funkstationen und zur Übermittlung der Meßergebnisse über einen Nachrichtenübertragungskanal zu einer ortsfesten Funkstation vorgesehen ist.

2. Digitales Funkübertragungssystem nach Anspruch 1
dadurch gekennzeichnet,
daß die nahe ortsfeste Funkstation zur Übertragung der in den fernen ortsfesten Funkstationen verwendeten Spreizcodes an die beweglichen Funkstation (MS) vorgesehen ist.

3. Digitales Funkübertragungssystem nach Anspruch 1 oder 2,
dadurch gekennzeichnet,
daß die ortsfeste Funkstation zur Abspeicherung der empfangenen Ergebnisse und zur Weiterschaltung der zur beweglichen Funkstation (MS) bestehenden Funkverbindung an eine ihr benachbarte ortsfeste Funkstation anhand der im Speicher enthaltenen Ergebnisse vorgesehen ist.

4. Digitales Funkübertragungssystem nach Anspruch 3,
dadurch gekennzeichnet,
daß eine Gewichtung der gespeicherten Meßwerte vorgesehen ist.

5. Digitales Funkübertragungssystem nach Anspruch 1, 2, 3 oder 4,
dadurch gekennzeichnet,
daß
- für die Gleichkanal-Nachrichtenübertragungskanäle der ortsfesten Funkstationen unterschiedliche Spreizcodes zur Synchronisation und zur Mehrwegeauflösung vorgesehen sind und daß
- die Messung der Empfangsgüte in der beweglichen Funkstation (MS) anhand der zur Mehrwegeauflösung vorgesehenen Spreizcodes vorgesehen ist.

6. Mobilfunkteilnehmergerät für ein digitales Funkübertragungssystem
- mit einem zur Entspreizung empfangener spreizcodierter Signale vorgesehenem Korrelator (K)
- mit einer Auswerteschaltung (AW), die zur Messung der Empfangsgüte der entspreizten Empfangssignale vorgesehen ist,
- mit einer Steuereinrichtung (ST), die zur Steuerung von Korrelator (K) und Auswerteschaltung (AW) vorgesehen ist und
- mit einem Sender (S)
dadurch gekennzeichnet,
daß zum Weiterschalten einer Funkverbindung bei Funkzellenwechsel einer beweglichen Funkstation die Steuereinrichtung (ST) zur Aussendung der in der Auswerteschaltung (AW) ausgewerteten Meßergebnisse über den Sender (S) vorgesehen ist.

7. Mobilfunkteilnehmergerät für ein digitales Funkübertragungssystem nach Anspruch 6
dadurch gekennzeichnet,
daß ein mit der Auswerteschaltung (AW) verbundener erster Speicher (SPM) vorgesehen ist, in welchem die Meßergebnisse abspeicherbar sind.

8. Mobilfunkteilnehmergerät für ein digitales Funkübertragungssystem nach Anspruch 6 oder 7
dadurch gekennzeichnet,
daß ein zweiter Speicher (SPT) zur Speicherung der in vorangegangenen Meßzyklen ausgewerteten Meßergebnissen vorgesehen ist.

9. Mobilfunkteilnehmergerät für ein digitales Funkübertragungssystem nach Anspruch 6, 7 oder 8
dadurch gekennzeichnet,
daß ein dritter Speicher (SPC) zur Speicherung von Spreizcodewörtern vorgesehen ist.

## Claims

1. A digital radio transmission system, comprising base radio stations and mobile radio stations with separation of adjacent radio cells on the basis of frequency and separation of co-channel radio cells on the basis of different signal waveforms, notably different spread codes, characterized in that for switching through a radio connection in the event of a change of radio cell for a mobile radio station, the mobile radio station (MS) is operative to measure, in the presence of a radio connection to a near base radio station (BS), the reception quality of the co-channel message transmission channels of remote base radio stations and to transmit the measuring results to a base radio station via a message transmission channel.

2. A digital radio transmission system as claimed in Claim 1, characterized in that the near base radio station is operative to transmit the spread codes used in the remote base radio stations to the mobile radio station (MS).

3. A digital radio transmission system as claimed in Claim 1 or 2, characterized in that the base radio station is operative to store the results received and to switch through the radio existing radio connection to the mobile radio station (MS) to an adjacent base radio station on the basis of the results stored in the memory.

4. A digital radio transmission system as claimed in Claim 3, characterized in that the stored measuring values are weighted.

5. A digital radio transmission system as claimed in Claim 1, 2, 3 or 4, characterized in that
- for the co-channel message transmission channels of the base radio stations different spread codes are provided for synchronization and for multi-path resolution, and
- the reception quality is measured in the mobile radio station (MS) on the basis of the spread codes provided for the multi-path resolution.

6. A mobile radio subscriber device for a digital radio transmission system, comprising
- a correlator (K) for de-spreading spread-coded signals received,
- an evaluation circuit (AW) for measuring the reception quality of the despreaded reception signals,
- a control device (ST) for controlling the correlator (K) and the evaluation circuit (AW), and
- a transmitter (S),
characterized in that for switching a radio connection in the event of a change of radio cell for a mobile radio station, the control device (ST) is operative to transmit the measuring results evaluated in the evaluation circuit (AW) via the transmitter (S).

7. A mobile radio subscriber device for a digital radio transmission system as claimed in Claim 6, characterized in that there is provided a first memory (SPM) which is connected to the evaluation circuit (AW) and in which the measuring results can be stored.

8. A mobile radio subscriber device for a digital radio transmission system as claimed in Claim 6 or 7, characterized in that there is provided a second memory (SPT) for storing the measuring results evaluated during preceding measuring cycles.

9. A mobile radio subscriber device for a digital radio transmission system as claimed in Claim 6, 7 or 8, characterized in that there is provided a third memory (SPC) for storing spread code words.

## Revendications

1. Système de radiotransmission numérique comportant des stations radio fixes et mobiles, avec une séparation en fréquence de cellules radio voisines ainsi qu'une séparation de cellules radio à voie commune par des formes de signaux différentes, en particulier par des codes d'étalement différents, caractérisé en ce que, en vue du transfert d'une liaison radio en cas de changement de cellule radio par une station radio mobile, la station radio mobile (MS), pendant l'existence d'une liaison radio avec une station radio fixe (BS) proche, est conçue pour mesurer la qualité de réception des canaux de transmission d'informations à voie commune de stations radio fixes éloignées et pour transmettre les résultats des mesures à une station radio fixe via un canal de transmission d'informations.

2. Système de radiotransmission numérique selon la revendication 1, caractérisé en ce que la station radio fixe proche est conçue pour transmettre les codes d'étalement utilisés dans les stations radio fixes éloignées à la station radio mobile (MS).

3. Système de radiotransmission numérique selon la revendication 1 ou 2, caractérisé en ce que la station radio fixe est conçue pour mémoriser les résultats reçus et pour transférer la liaison radio établie avec la station radio mobile (MS) à une station radio fixe voisine sur base des résultats stockés dans la mémoire.

4. Système de radiotransmission numérique selon la revendication 3, caractérisé en ce qu'une pondération des valeurs de mesure mémorisées est prévue.

5. Système de radiotransmission numérique selon la revendication 1, 2, 3 ou 4, caractérisé en ce que :
- pour les canaux de transmission d'informations à voie commune des stations radio fixes des codes d'étalement différents sont prévus pour la synchronisation et pour la résolution multivoie, et
- la mesure de la qualité de réception s'effectue dans la station radio mobile (MS) sur base des codes d'étalement prévus pour une résolution multivoie.

6. Appareil d'abonné radio mobile pour un système de radiotransmission numérique comportant :
- un corrélateur (K) destiné à supprimer l'étalement des signaux à codes d'étalement reçus;
- un circuit d'évaluation (AW) prévu pour mesurer la qualité de réception des signaux de réception à étalement supprimé;
- un dispositif de commande (ST) destiné à commander le corrélateur (K) et le circuit d'évaluation (AW), et
- un émetteur (S)
caractérisé en ce que, pour transférer une liaison radio dans le cas d'un changement de cellule radio par une station radio mobile, le dispositif de commande (ST) est prévu pour expédier les résultats de mesure évalués dans le circuit d'évaluation (AW) via l'émetteur (S).

7. Appareil d'abonné radio mobile pour un système de radiotransmission numérique selon la revendication 6, caractérisé en ce qu'une première mémoire, dans laquelle les résultats des mesures peuvent être stockés, est prévue, connectée au circuit d'évaluation (AW).

8. Appareil d'abonné radio mobile pour un système de radiotransmission numérique selon la revendication 6 ou 7, caractérisé en ce qu'une deuxième mémoire (SPT) est prévue pour stocker les résultats de mesure évalués dans les cycles de mesure précédents.

9. Appareil d'abonné radio mobile pour un système de radiotransmission numérique selon la revendication 6, 7 ou 8, caractérisé en ce qu'une troisième mémoire (SPC) est prévue pour stocker les mots de code d'étalement.
